# FASCICULE DE BREVET EUROPEEN

(11) **EP 0 847 511 B1**
(45) Date de publication et mention de la délivrance du brevet: **28.04.1999**
(21) Numéro de dépôt: 96931119.0
(22) Date de dépôt: 12.09.1996
(51) Int. Cl.: F16L 37/32

(54) **RACCORD RAPIDE POUR CONDUITES DE FLUIDE SOUS PRESSION**
SCHNELLKUPPLUNG FÜR DRUCKLEITUNGEN
QUICK-CONNECT COUPLING FOR PRESSURISED FLUID LINES

(30) Priorité: 19.09.1995 FR 9511174
(43) Date de publication de la demande: 17.06.1998
(73) Titulaire: Parker Hannifin S.A., 74100 Ville-la-Grand (FR)
(72) Inventeur: HARDY, Liana, F-74100 Ville-la-Grand (FR); CHAFFARDON, Claude, F-74380 Cranves-Sales (FR)
(74) Mandataire: Maureau, Philippe
(86) Numéro de dépôt international: FR9601409
(87) Numéro de publication internationale: WO9711302

(56) Documents cités:
- EP-A- 0 187 238
- EP-A- 0 265 569
- EP-A- 0 338 942
- US-A- 4 398 561

## Description

La présente invention concerne selon la première partie de la revendication 1 un raccord rapide pour conduites de fluide sous pression, permettant la connexion de ces conduites alors que du fluide sous pression subsiste dans l'une d'elles. Un tel raccord est connu du EP-A-338 942.

Ce raccord comprend, de manière connue en soi, un élément mâle et un élément femelle dont les extrémités à connecter sont fermées par des soupapes. Chaque soupape comprend un organe obturateur venant appuyer contre l'organe obturateur de l'autre soupape lors de la connexion, un ressort de rappel pressant cet organe obturateur contre un siège et une butée limitant la course d'ouverture de l'organe obturateur. La butée de l'élément sous pression est fixe et est positionnée de manière telle que l'organe obturateur est en appui contre elle lorsque les éléments mâle et femelle sont connectés. L'autre butée est montée coulissante dans l'autre élément, de manière à pouvoir occuper une position fixe avancée, dans laquelle l'organe obturateur est en appui contre la butée lorsque les éléments mâle et femelle sont connectés, et à pouvoir reculer dans l'élément, afin d'autoriser un recul de l'organe obturateur qui lui est associé au-delà de la course d'ouverture précitée, la distance de recul correspondant sensiblement à la course d'ouverture de l'autre organe obturateur. Le raccord comprend également des moyens de verrouillage et de rappel de la butée coulissante en position avancée, ces moyens autorisant le mouvement de recul de la butée coulissante lors de la connexion des éléments mâle et femelle, et verrouillant la butée coulissante en position avancée une fois cette connexion réalisée.

Dans l'un des raccords existants, l'élément à butée coulissante comprend une douille coulissante, située en arrière de la soupape, sur laquelle agissent les moyens précités de verrouillage et de rappel de la butée en position avancée. Cette douille présente une partie tubulaire externe, guidée par le corps de l'élément, et une partie tubulaire interne, recevant à coulissement une tige de guidage solidaire de l'organe obturateur. Les parties externe et interne sont reliées l'une à l'autre par des parois radiales délimitant entre elles des ouvertures de passage du fluide. La butée est constituée soit par l'extrémité antérieure de la partie tubulaire intérieure, contre laquelle vient s'appuyer la face postérieure de l'organe obturateur, soit par une paroi transversale positionnée dans la partie tubulaire intérieure, contre laquelle vient s'appuyer l'extrémité de la tige de guidage de l'organe obturateur.

Cette douille a une structure complexe, qui rend ces raccords relativement difficiles et onéreux à fabriquer.

La mise en place dans le corps de l'élément de l'ensemble douille-organe obturateur-ressort de rappel n'est pas très facile à réaliser, du fait du risque d'échappement de la tige de guidage de l'organe obturateur hors de la partie tubulaire interne.

De plus, l'écoulement du fluide à travers cette douille est perturbé par les bras radiaux et par le ressort de rappel de l'organe obturateur, et la résistance de cette douille ainsi que de la soupape à des pressions élevées est limitée.

La présente invention vise à remédier à l'ensemble de ces inconvénients, en fournissant un raccord simple et peu onéreux à fabriquer et à assembler, permettant un bon écoulement du fluide et une bonne résistance à la pression.

Le raccord qu'elle concerne est du type précité, dont l'élément muni de la butée coulissante comprend, en arrière de la soupape, une douille coulissante comportant la butée, sur laquelle agissent les moyens précités de verrouillage et de rappel de la butée en position avancée.

Selon l'invention :
- cette douille est de forme générale sensiblement tubulaire, la butée étant constituée par la face antérieure de cette douille, et
- l'élément à butée coulissante comprend une deuxième douille coulissante, située en avant de la première douille, ayant un diamètre externe qui correspond, au jeu près, au diamètre interne du corps, l'extrémité antérieure de cette deuxième douille formant l'organe obturateur de la soupape et comprenant, immédiatement en arrière de cet organe obturateur, des trous de passage du fluide, et l'extrémité arrière de cette douille étant conformée pour venir en appui contre la face de la première douille formant la butée.

Les deux douilles ont une structure relativement simple et sont peu onéreuses à fabriquer.

Leur mise en place dans le corps de l'élément et celle du ressort de rappel de l'organe obturateur sont réalisées par simple engagement et coulissement dans le corps.

L'écoulement du fluide au travers de ces douilles n'est pas perturbé.

En outre, l'organe obturateur fait partie intégrante de la deuxième douille et est parfaitement guidé dans le corps du raccord, ce qui assure une bonne résistance de la soupape à des pressions élevées.

De préférence, les trous de passage du fluide sont orientés obliquement vers l'extérieur, pour optimiser l'écoulement.

Pour sa bonne compréhension, l'invention est à nouveau décrite ci-dessous en référence au dessin schématique annexé représentant, à titre d'exemple non limitatif, une forme de réalisation préférée du raccord qu'elle concerne.

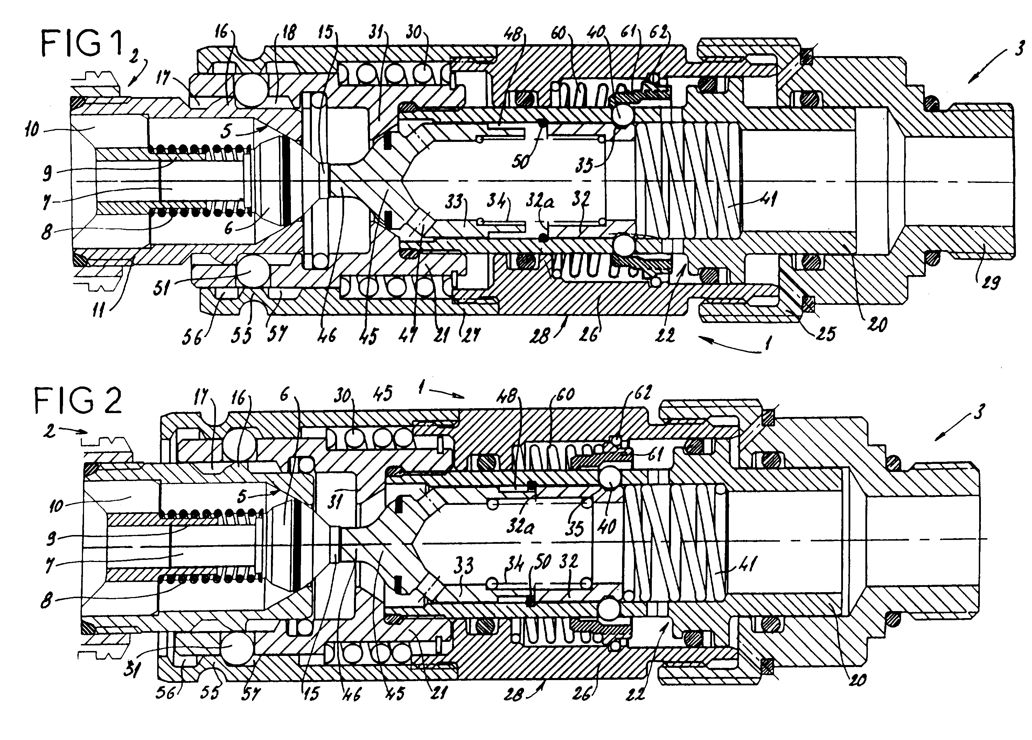

Les figures 1 à 4 en sont des vues en coupe longitudinales, dans quatre positions successives de connexion.

Les figures représentent un raccord rapide 1 pour conduites de fluide sous pression, permettant la connexion de ces conduites alors que du fluide sous pression subsiste dans l'une d'elles.

Ce raccord comprend un élément mâle 2 et un élément femelle 3, dont les extrémités à connecter sont fermées par des soupapes.

La soupape de l'élément mâle 2 comprend un siège 5, un organe obturateur 6, prolongé, côté intérieur, par une tige de guidage 7, un ressort de rappel 8 pressant cet organe obturateur 6 contre le siège 5 et une partie tubulaire interne 9, fixe en position, recevant la tige 7 avec possibilité de coulissement.

La partie tubulaire 9 comprend des parois radiales 10 prenant appui contre le corps 11 de l'élément mâle 2, qui délimitent entre elles des ouvertures de passage du fluide.

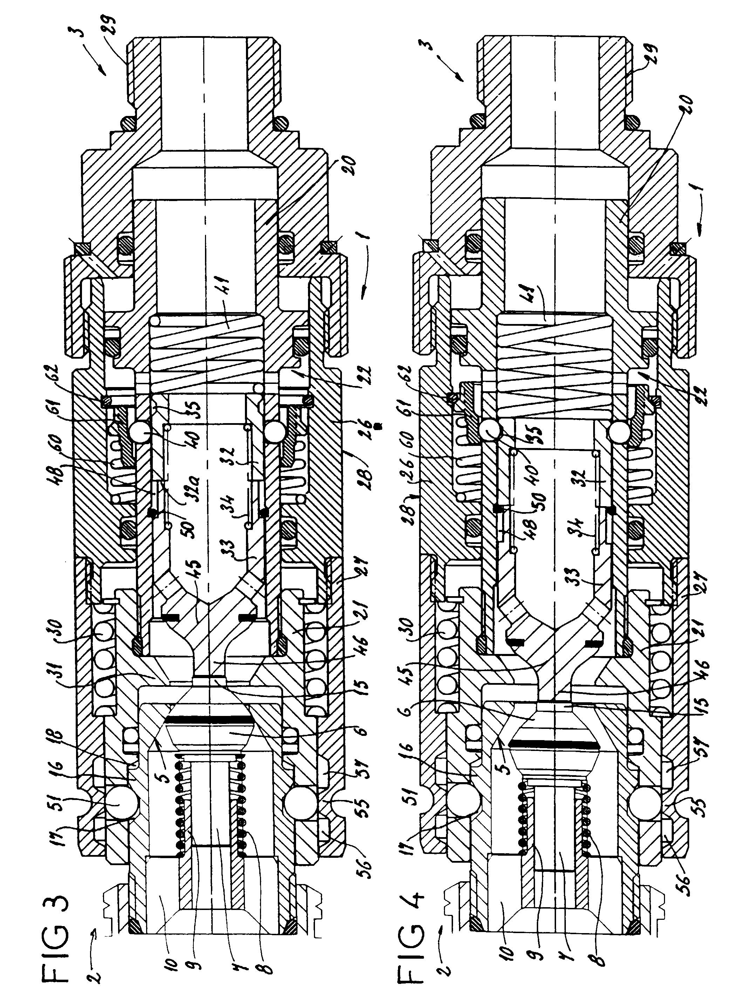

L'extrémité antérieure de la partie tubulaire 9 constitue une butée fixe contre laquelle vient s'appuyer la face postérieure de l'organe obturateur 6. Cette butée limite la course d'ouverture de l'organe obturateur 6 et est positionnée de manière telle que cet organe obturateur 6 est en appui contre elle lorsque les éléments mâle 2 et femelle 3 sont connectés, comme le montre la figure 4.

Du côté extérieur, l'organe obturateur 6 comprend un téton cylindrique 15 venant appuyer contre l'organe obturateur de l'autre soupape lors de la connexion des éléments mâle 2 et femelle 3.

En outre, l'élément mâle 2 comprend une saillie annulaire extérieure 16 à pans latéraux inclinés, délimitant deux gorges 17 et 18.

L'élément femelle 3 comprend deux pièces 20,21 assemblées, formant un corps intérieur 22 contenant la soupape de l'élément femelle 3, et trois pièces assemblées 25,26,27 formant un manchon extérieur 28 et une extrémité 29 de raccordement à la conduite.

Le corps intérieur 22 est mobile en coulissement par rapport au manchon extérieur 28, un ressort 30 étant interposé entre eux. Ce ressort 30 maintient normalement le corps intérieur 22 et le manchon extérieur 28 dans la position relative montrée à la figure 1.

La soupape de l'élément femelle 3 comprend un siège formé par une saillie annulaire 31, deux douilles 32,33 coulissantes dans le corps 22, ayant des diamètres externes qui correspondent, au jeu près, au diamètre interne du corps 22, et un ressort 34 interposé entre ces douilles 32,33.

La douille 32 est de forme générale sensiblement tubulaire. Elle comprend une face antérieure 32a, un épaulement interne, recevant une extrémité du ressort 34, et une gorge externe 35 à pans latéraux inclinés, pouvant recevoir des billes 40.

Ces billes 40 sont engagées dans des alésages radiaux aménagés au travers de la paroi du corps 22 et sont mobiles radialement dans ces alésages, entre une position intérieure, représentée aux figures 1,2 et 4, et une position extérieure, représentée à la figure 3.

La paroi postérieure de la douille 32 est en appui contre un ressort 41, prenant également appui contre un épaulement aménagé dans le corps 22.

La douille 33 est située en avant de la douille 32. Son extrémité antérieure forme l'organe obturateur 45 de la soupape, prolongé antérieurement par un téton cylindrique 46, et comprend, immédiatement en arrière de cet organe obturateur 45, des trous 47 orientés obliquement vers l'extérieur, assurant le passage du fluide. Son extrémité arrière est conformée pour venir en appui contre la face antérieure 32a de la douille 32. Elle comprend un épaulement interne recevant le ressort 34, et un évidement annulaire externe 48.

Entre les deux douilles 32,33, le corps 22 comprend un jonc 50, engagé et retenu dans une gorge.

En outre, le corps interne 22 comprend, au niveau de sa cavité destinée à recevoir l'élément mâle 2, des billes 51 engagées dans des alésages radiaux aménagés au travers de la paroi du corps 22. Ces billes 51 sont mobiles radialement dans ces alésages, entre une position intérieure, représentée aux figures 1,3 ou 4, et une position extérieure, représentée à la figure 2.

Le manchon extérieur 28 comprend, quant à lui, à hauteur de ces billes 51, une saillie annulaire intérieure 55 à pans latéraux inclinés, délimitant deux gorges 56 et 57.

En outre, le corps intérieur 22 et le manchon extérieur 28 sont conformés pour délimiter entre eux un espace annulaire dans lequel sont placés un ressort 60, une bague 61 ayant un épaulement interne conique et une saillie annulaire externe, et un jonc 62, engagé et retenu dans une gorge aménagée dans la face interne du manchon 28.

Il apparaît sur les figures que ce jonc 62 est conformé pour venir en appui contre la saillie annulaire de la bague 61 et pour déplacer la bague à l'encontre du ressort 60 au cours de la connexion. Il apparaît également que la bague 61 et son épaulement conique sont conformés pour, selon leur position, soit maintenir les billes 40 dans leur position intérieure, comme représenté aux figures 1 ou 4, soit autoriser le déplacement des billes 40 vers leur position extérieure, comme représenté à la figure 2, soit presser les billes 40 vers l'intérieur du corps 22, comme représenté à la figure 3.

La figure 1 représente les éléments mâle 2 et femelle 3 en début de connexion, lorsque l'élément mâle 2 est engagé dans la cavité de l'élément femelle 3. L'élément mâle 2, relié à l'outil actionné par le fluide, contient généralement du fluide sous pression tandis que l'élément femelle 3, relié à la source de fluide, n'est pas sous pression. La bague 61 verrouille les billes 40 dans leur position la plus intérieure, dans laquelle ces billes sont engagées dans la gorge 35 de la douille 32.

Au cours de l'engagement de l'élément mâle 2, la saillie 16 vient rencontrer les billes 51, qui sont maintenues dans une position intérieure maximale par la saillie 55, située en face d'elle. Simultanément, le téton 15 de l'organe obturateur 6 vient au contact du téton correspondant 46 de l'organe obturateur 45.

La poursuite de l'engagement de l'élément mâle 2 provoque un déplacement, vers la droite de la figure, du corps intérieur 22 par rapport au manchon extérieur 28. Ce déplacement entraîne une compression des ressorts 30 et 60, ainsi qu'un déplacement des billes 40 au-delà de l'épaulement conique de la bague 61.

Ce déplacement se poursuit jusqu'à ce que les billes 51 se trouvent en face de la gorge 57, et soient poussées dans celle-ci par le pan latéral incliné de la saillie 16.

L'engagement de l'élément mâle 2 peut alors se poursuivre, ce qui éloigne l'organe obturateur 45 de son siège et fait reculer la douille 33 à l'encontre du ressort 34. L'extrémité arrière de la douille 33 vient en appui contre la face antérieure 32a de la douille 32, comme le montre la figure 2, et entraîne cette douille 32 dans son mouvement de recul. Ce recul chasse les billes 40 hors de la gorge 35 et les amène dans leur position extérieure.

Le recul se poursuit jusqu'à la position représentée à la figure 3. Dans cette position, l'élément mâle 2 est complètement engagé dans la cavité de l'élément femelle 3. La gorge 17 vient en face des billes 51, et ces billes 51 sont chassées dans cette gorge 17, ce qui réalise le verrouillage des éléments mâle 2 et femelle 3. Le ressort 30 est libéré et ramène le corps interne 22 et le manchon extérieur 28 à leur position relative d'origine. Le ressort 60 est simultanément libéré et amène l'épaulement conique de la bague 61 en appui contre les billes 40, ce qui presse ces dernières vers l'intérieur du corps 22.

Lorsque la pression est établie dans l'élément femelle 3, le fluide déplace les douilles 32 et 33 vers la gauche des figures jusqu'à leur position représentée à la figure 4. Dans cette position, la gorge 35 vient à nouveau en face des billes 40, et ces dernières sont chassées par la bague 61 dans la gorge 35. La bague 61 revient dans sa position de verrouillage de ces billes 40.

Les deux soupapes sont alors ouvertes, avec les deux organes obturateurs 6 et 45 immobilisés en position, l'organe obturateur 6 étant en butée contre la partie tubulaire 9, et la douille 33 étant en appui contre la douille 32.

La déconnexion des éléments mâle 2 et femelle 3 est réalisée en opérant une traction sur l'élément mâle, ce qui déplace le corps intérieur 22 vers la gauche jusqu'à ce que les billes 51 passent dans la gorge 56.

Les deux douilles 32,33 ont une structure relativement simple et sont peu onéreuses à fabriquer.

Leur mise en place dans le corps 22 et celle du ressort de rappel 34 sont réalisées par simple engagement et coulissement dans le corps 22. Le jonc 50 assure le montage de l'ensemble douille 32-ressort 41 dans la pièce tubulaire 20, puis le ressort 34 et la douille 33 sont mis en place avant assemblage de la pièce 20 à la pièce 21. L'évidement 48 permet le recul de la douille 33 au-delà de ce jonc 50.

L'écoulement du fluide au travers de ces douilles 32,33 n'est pas perturbé, et l'orientation oblique des trous 47 permet d'optimiser cet écoulement.

En outre, l'organe obturateur 45 fait partie intégrante de la douille 33 et est parfaitement guidé dans le corps 22, ce qui assure une bonne résistance de la soupape à des pressions élevées.

Le ressort 9 est avantageusement plus raide que le ressort 34 mais moins que le ressort 41, de sorte qu'en cas d'absence de pression dans l'élément mâle 2, les deux soupapes s'ouvrent sans recul de la douille 32.

## Revendications

1. Raccord rapide pour conduites de fluide sous pression, permettant la connexion de ces conduites alors que du fluide sous pression subsiste dans l'une d'elles, du type comprenant un élément mâle (2) et un élément femelle (3) dont les extrémités à connecter sont fermées par des soupapes ; chaque soupape comprend un organe obturateur (6, 45) venant appuyer contre l'organe obturateur de l'autre soupape lors de la connexion, un ressort de rappel (8, 41) pressant cet organe obturateur contre un siège (5, 31) et une butée (9, 32a) limitant la course d'ouverture de l'organe obturateur ; la butée (9) de l'élément sous pression est fixe et est positionnée de manière telle que l'organe obturateur est en appui contre elle lorsque les éléments mâle et femelle sont connectés ; l'autre butée (32a) est montée coulissante dans l'autre élément, de manière à pouvoir occuper une position fixe avancée, dans laquelle l'organe obturateur est en appui contre la butée lorsque les éléments mâle et femelle sont connectés, et à pouvoir reculer dans l'élément, afin d'autoriser un recul de l'organe obturateur qui lui est associé au-delà de la course d'ouverture précitée, la distance de recul correspondant sensiblement à la course d'ouverture de l'autre organe obturateur ; le raccord comprend également des moyens de verrouillage (35, 40) et de rappel (60, 61) de la butée coulissante en position avancée, ces moyens autorisant le mouvement de recul de la butée coulissante lors de la connexion des éléments mâle et femelle, et verrouillant la butée coulissante en position avancée ne fois cette connexion réalisée ; la butée coulissante (32a) est aménagée dans une douille coulissante (32), située en arrière de la soupape, sur laquelle agissent les moyens précités de verrouillage et de rappel de la butée en position avancée ;
raccord caractérisé en ce que :
- cette douille (32) est de forme générale sensiblement tubulaire, la butée étant constituée par la face antérieure (32a) de cette douille (32), et
- l'élément (3) à butée coulissante comprend une deuxième douille (33) coulissante, située en avant de la première douille (32), ayant un diamètre externe qui correspond, au jeu près, au diamètre interne du corps (22), l'extrémité antérieure de cette deuxième douille (33) formant l'organe obturateur (45) de la soupape et comprenant, immédiatement en arrière de cet organe obturateur (45), des trous (47) de passage du fluide, et l'extrémité arrière de cette douille (33) étant conformée pour venir en appui contre la face (32a) de la douille (32) formant la butée.

2. Raccord selon la revendication 1, caractérisé en ce que les trous (47) de passage du fluide sont orientés obliquement vers l'extérieur.

3. Raccord selon la revendication 1 ou la revendication 2, caractérisé en ce que la douille (32) comprend une gorge externe (35) à pans latéraux inclinés, pouvant recevoir des billes (40), ces billes (40) étant engagées dans des alésages radiaux, aménagés au travers de la paroi du corps (22), et étant mobiles radialement dans ces alésages entre une position intérieure et une position extérieure, tandis que le raccord comprend un ressort (60), une bague (61) munie d'un épaulement interne conique et d'une saillie annulaire externe, et un jonc (62), engagé et retenu dans une gorge aménagée dans la face interne du manchon extérieur (28), ce jonc (62) étant conformé pour venir en appui contre la saillie annulaire et pour déplacer la bague (61) à l'encontre du ressort (60) au cours de la connexion, et la bague (61) ainsi que son épaulement conique étant conformés pour, selon leur position, soit maintenir les billes (40) dans leur position intérieure, dans laquelle ces billes (40) sont engagées dans la gorge (35) de la douille (32), soit autoriser le déplacement des billes (40) dans leur position extérieure, ou soit presser les billes (40) vers l'intérieur du corps (22).

4. Raccord selon l'une des revendications 1 à 3, caractérisé en ce que le ressort (9) de l'élément (2) sous pression est plus raide que le ressort (34) de l'autre élément (3) mais moins que le ressort (41) des moyens de verrouillage et de rappel de la butée coulissante en position avancée.

## Patentansprüche

1. Schnellkupplung für Leitungen für Fluide unter Druck, die die Verbindung dieser Leitungen ermöglicht, während sich unter Druck befindliches Fluid in einer von ihnen befindet, von dem Typ, der ein männliches Element (2) und ein weibliches Element (3) umfaßt, deren zu verbindende Enden durch Ventile geschlossen sind, wobei jedes Ventil ein Verschlußorgan (6, 45), das beim Verbinden gegen das Verschlußorgan des anderen Ventils drückt, eine Rückholfeder (8, 41), die dieses Verschlußorgan gegen einen Sitz (5, 31) drückt, und einen Anschlag (9, 32a), der den Öffnungsweg des Verschlußorgans begrenzt, umfaßt;
der Anschlag (9) des Elements unter Druck fix und so positioniert ist, daß das Verschlußorgan gegen ihn drückt, wenn das männliche und weibliche Element miteinander verbunden sind;
der andere Anschlag (32a) auf gleitbare Weise im anderen Element montiert ist, so daß es eine fixe, vorgeschobene Position einnehmen kann, in der das Verschlußorgan gegen den Anschlag drückt, wenn das männliche und weibliche Element miteinander verbunden sind, und sich im Element zurückbewegen kann, um ein Zurückbewegen des mit ihm verbundenen Verdichtungsorgans über den obengenannten Öffnungsweg hinaus zu ermöglichen, wobei die Strecke der Rückwärtsbewegung ungefähr dem Öffnungsweg des anderen Verschlußorgans entspricht;
die Kupplung auch Mittel zur Verriegelung (35, 40) und zum Rückholen (60, 61) des gleitenden Anschlags in der vorgeschobenen Position umfaßt, wobei diese Mittel die Rückwärtsbewegung des gleitenden Anschlags beim Verbinden des männlichen und weiblichen Elements ermöglichen und den gleitenden Anschlag in der vorgeschobenen Position verriegeln, wenn diese Verbindung hergestellt ist;
der gleitende Anschlag (32a) in einer gleitenden Hülse (32) vorgesehen ist, die hinter dem Ventil angeordnet ist und auf die die obengenannten Mittel zur Verriegelung und zum Rückholen des Anschlags in der vorgeschobenen Position einwirken,
dadurch gekennzeichnet, daß
- die allgemeine Form dieser Hülse (32) ungefähr rohrförmig ist, wobei der Anschlag durch die vordere Fläche (32a) dieser Hülse (32) gebildet wird, und
- das Element (3) mit gleitendem Anschlag eine zweite gleitende Hülse (33) umfaßt, die vor der ersten Hülse (32) angeordnet ist und die einen äußeren Durchmesser aufweist, der bis auf ein Spiel dem inneren Durchmesser des Körpers (22) entspricht, wobei das vordere Ende dieser zweiten Hülse (33) das Verschlußorgan (45) des Ventils bildet und unmittelbar hinter diesem Verschlußorgan (45) Öffnungen (47) zum Durchlaß des Fluids aufweist, und wobei das hintere Ende dieser Hülse (33) so geformt ist, daß es gegen die Fläche (32a) der Hülse (32) drückt, die den Anschlag bildet.

2. Kupplung nach Anspruch 1, dadurch gekennzeichnet, daß die Öffnungen (47) zum Durchlaß des Fluids schräg nach außen gerichtet sind.

3. Kupplung nach Anspruch 1 oder 2, dadurch gekennzeichnet, daß die Hülse (32) eine äußere Vertiefung (35) mit geneigten Seitenflächen umfaßt, die Kugeln (40) aufnehmen kann, wobei diese Kugeln (40) in radialen Bohrungen untergebracht sind, die durch die Seitenwand des Körpers (22) angebracht sind, und sich radial in diesen Bohrungen zwischen einer inneren Position und einer äußeren Position bewegen können, während die Kupplung eine Feder (60), einen Ring (61) mit einer inneren konischen Schulter und einem äußeren ringförmigen Vorsprung sowie einen Verbindungsring (62), der in eine in der Innenfläche der äußeren Muffe (28) gebildeten Vertiefung eingreift und in dieser festgehalten wird, umfaßt, wobei dieser Verbindungsring (62) so geformt ist, daß er im Lauf der Verbindung gegen den ringförmigen Vorsprung drückt und den Ring (61) zur Feder (60) hin bewegt, und wobei sein Ring (61) und seine konische Schulter so geformt sind, daß sie, je nach ihrer Position, entweder die Kugeln (40) in ihrer inneren Position halten, in der diese Kugeln (40) in die Vertiefung (35) der Hülse (32) eingreifen, die Bewegung der Kugeln (40) in ihre äußere Position ermöglichen oder die Kugeln (40) gegen das Innere des Körpers (22) pressen.

4. Kupplung nach einem der Ansprüche 1 bis 3, dadurch gekennzeichnet, daß die Feder (9) des Elements (2) unter Druck härter ist als die Feder (34) des anderen Elements (3), jedoch weniger hart als die Feder (41) der Mittel zur Verriegelung und zum Rückholen des gleitenden Anschlags in vorgeschobener Position.

## Claims

1. Quick-connect coupling for pressurized fluid lines allowing connection of these lines while pressurized fluid is still present in one of them, of the type comprising a male element (2) and a female element (3), the ends of which to be connected are closed by valves; each valve comprising a sealing member (6, 45) engaging with the sealing member of the other valve during connection, a return spring (8, 41) pressing this sealing member against a seat (5, 31) and an abutment (9, 32a) limiting the opening stroke of the sealing member; the abutment (9) of the element under pressure is fixed and is positioned in a manner such that the sealing member engages with it when the male and female elements are connected; the other abutment (32a) is mounted in a sliding manner in the other element such that it can occupy an advanced fixed position in which the sealing organ engages with the abutment when the male and female elements are connected, and can withdraw into the element in order to allow withdrawal of the sealing member with which it is associated beyond the abovementioned opening stroke, the withdrawal distance substantially corresponding to the opening stroke of the other sealing member; the coupling also comprises means for locking (35, 40) and returning (50, 51) the sliding abutment in the advanced position, this means allowing the withdrawal movement of the sliding abutment during the connection of the male and female elements, and locking the sliding abutment in the advanced position once this connection has been made; the sliding abutment (32a) is arranged in a sliding sleeve (32) situated behind the valve, on which the abovementioned means for locking and returning the abutment in the advanced position act;
the coupling being characterized in that:
- this sleeve (32) is of a substantially tubular general shape, the abutment being defined by the front surface (32a) of this sleeve (32), and
- the sliding abutment element (3) comprises a second sliding sleeve (33) located ahead of the first sleeve (32) and having an external diameter which corresponds, after allowing for clearance, to the internal diameter of the body (22), the front end of this second sleeve (33) forming the valve sealing member (45) and comprising, immediately behind this sealing member (45), holes (47) for passage of fluid, and the rear end of this sleeve (33) being shaped to engage with the surface (32a) of the sleeve (32) forming the abutment.

2. Coupling according to claim 1, characterized in that the holes (47) for passage of fluid are aligned obliquely towards the outside.

3. Coupling according to claim 1 or claim 2, characterized in that the sleeve (32) comprises an external groove (35) which has angled lateral faces and can accommodate balls (40), these balls (40) being engaged in radial bores arranged through the wall of the body (22) and being radially movable in these bores between an internal position and an external position, while the coupling comprises a spring (60), a ring (61) equipped with a conical internal shoulder and an external annular projection, and a retaining ring (62) engaged and held in a groove arranged in the internal surface of the external muff (28), this retaining ring (62) being shaped to engage with the annular projection and to displace the ring (61) on meeting the spring (60) in the course of connection, and the ring (61) and its conical shoulder being shaped to, according to their position, either keep the balls (40) in their internal position, in which these balls (40) are engaged in the groove (35) of the sleeve (32), or allow displacement of the balls (40) in their external position, or force the balls (40) towards the inside of the body (22).

4. Coupling according to one of claims 1 to 3, characterized in that the spring (9) of the element (2) under pressure has more tension than the spring (34) of the other element (3), but less tension than the spring (41) of the means for locking and returning the sliding abutment in the advanced position.
